# EUROPÄISCHE PATENTANMELDUNG

(11) **EP 1 375 320 A1**
(43) Veröffentlichungstag der Anmeldung: **02.01.2004**
(21) Anmeldenummer: 03010557.1
(22) Anmeldetag: 12.05.2003
(51) Int. Cl.: B62J 7/04, B62J 9/00

(54) **Sattelstützengepäckträger**

(30) Priorität: 26.06.2002 CH 11032002
(71) Anmelder: Gebrueder Pletscher AG, 8460 Marthalen (CH)
(72) Erfinder: Fitz, Helmut, 8462 Rheinau (CH)
(74) Vertreter: Patentanwälte Schaad, Balass, Menzl & Partner AG

(57) **Zusammenfassung**

Die Erfindung betrifft einen Sattelstützengepäckträger mit einem Halteelement (1) zur Befestigung des Gepäckträgers an einem Fahrzeug und einem Trägerteil (2) zur Aufnahme einer Last. Der Trägerteil (2) ist mit dem Halteelement (1) über ein Gelenk (3) verbunden, wobei mittels des Gelenks (3) verschiedene Winkel (α) zwischen dem Halteelement (1) und dem Trägerteil (2) fixierbar einstellbar sind.

## Beschreibung

Die Erfindung betrifft einen Sattelstützengepäckträger gemäss dem Oberbegriff von Anspruch 1.

Sattelstützengepäckträger sind insbesondere für Fahrräder geeignet und müssen lediglich am Sattelrohr des Fahrrads angebracht werden. Daneben ist keine weitere Abstützung oder Fixierung des Gepäckträgers am Fahrrad notwendig. Häufig werden derartige Gepäckträger bei Mountain-Bikes eingesetzt. Bereits bekannte Sattelstützengepäckträger weisen ein Halteelement und einen damit fest verbundenen Trägerteil auf. Das Halteelement dient der Fixierung des Gepäckträgers am Sattelrohr beispielsweise mittels eines Schnellspannverschlusses. Auf den im Anwendungsfall horizontal angeordneten flächigen Trägerteil kann eine Last aufgebracht und z.B. mittels eines Spanngummis fixiert werden.

Nachteilig an derartigen Gepäckträgern ist, dass der Gepäckträger starr und unbeweglich ist und dadurch nicht an das jeweilige Fahrrad angepasst werden kann. So kann es vorkommen, dass der Trägerteil bei gegebener Neigung des Sattelrohrs nicht horizontal verläuft, was nicht erwünscht ist.

Der vorliegenden Erfindung liegt die Aufgabe zugrunde, einen Sattelstützengepäckträger zu schaffen, der problemlos an das jeweilige Fahrzeug angepasst werden kann, so dass insbesondere der Trägerteil horizontal verläuft.

Diese Aufgabe wird erfindungsgemäss durch einen Sattelstützengepäckträger mit den Merkmalen von Anspruch 1 gelöst.

Vorteilhafte Weiterbildungen der Erfindung ergeben sich aus den abhängigen Ansprüchen, der Beschreibung und den Zeichnungen.

Der erfindungsgemässe Sattelstützengepäckträger weist ein Halteelement zur Befestigung des Gepäckträgers an einem Fahrzeug und ein Trägerteil zur Aufnahme einer Last auf. Der Trägerteil ist mit dem Halteelement über ein arretierbares Gelenk verbunden. Dadurch können zwischen dem Halteelement und dem Trägerteil verschiedene Winkel eingestellt und fixiert werden. Somit kann der Trägerteil des Gepäckträgers bei gegebener Rahmengeometrie des Fahrrads und Neigung des Sattelrohrs mittels des Gelenks in eine horizontale Richtung gebracht werden. Dies ist insbesondere bei ausgefallenen Rahmengeometrien, für die es keine entsprechenden Gepäckträger gibt, vorteilhaft.

In einer vorteilhaften Weiterbildung weist der erfindungsgemässe Gepäckträger einen verschliessbaren Behälter auf, der im Trägerteil angeordnet ist und dessen Deckel bevorzugt in der Ebene liegt, in der der Trägerteil die Last aufnimmt. Der Behälter dient zum sicheren Verwahren von Gegenständen, z.B. Werkzeug, sowie als zusätzliche Stütze für die aufzunehmende Last. Der Behälter kann nicht nur beim vorliegenden erfindungsgemässen Gepäckträger eingesetzt werden, sondern grundsätzlich auch bei anderen Gepäckträgern.

Beispiele für die Erfindung sind in den Zeichnungen dargestellt und nachfolgend beschrieben. Es zeigen rein schematisch:
- Fig. 1: einen an einem Sattelrohr befestigten Sattelstützengepäckträger;
- Fig. 2: den Gepäckträger aus Fig. 1 von oben;
- Fig. 3: den Gepäckträger aus Fig. 1 von der Seite;
- Fig. 4: den Gepäckträger aus Fig. 1 in drei verschiedenen Stellungen relativ zum Sattelrohr;
- Fig. 5: eine Explosionsdarstellung des Halteelements und eines Teils des Trägerteils des Gepäckträgers aus Fig. 1;
- Fig. 6a-c: ein Gelenkteil in drei Ansichten;
- Fig. 7: einen Zahn des Gelenkteils vergrössert dargestellt.

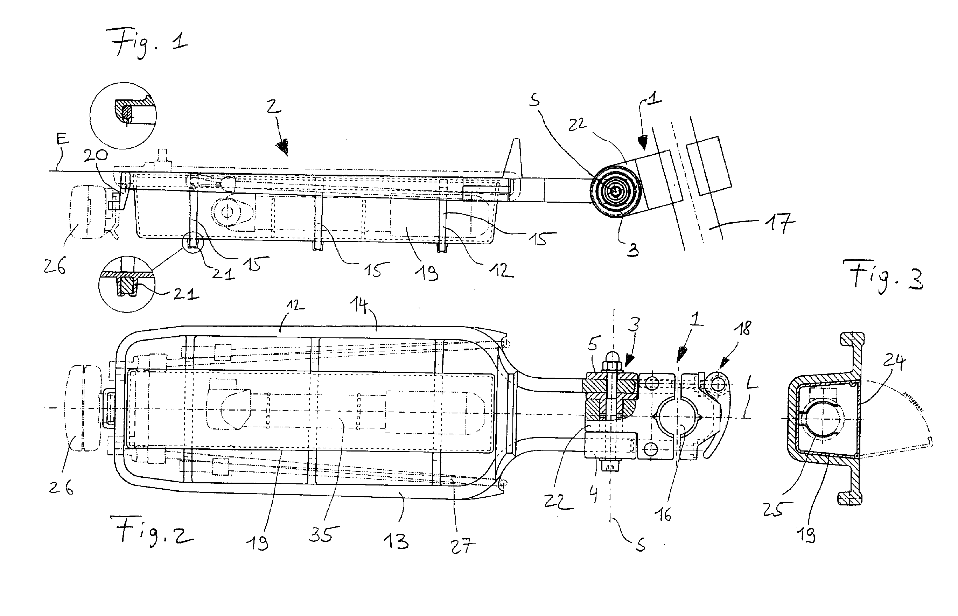

Fig. 1 bis 3 zeigen einen erfindungsgemässen Gepäckträger mit einem Halteelement 1 und einem damit durch ein feststellbares Gelenk 3 verbundenen Trägerteil 2 in verschiedenen Ansichten. Der Trägerteil 2 ist mittels des Gelenks 3 um eine Schwenkachse S relativ zum Halteelement 1 verschwenkbar. Das Halteelement 1 ist im Anwendungsfall an einer Stange, beispielsweise einem Sattelrohr 17, befestigt. Der Trägerteil 2 weist einen Rahmen 12 auf, welcher, wie aus Fig. 2 ersichtlich, im dem Halteelement 1 abgewandten Bereich im wesentlichen U-förmig mit einem ersten Schenkel 13 und einem zweiten Schenkel 14 ist. Die beiden Schenkel 13,14 verlaufen in Längsrichtung L des Gepäckträgers weitgehend parallel und nähern sich im Bereich des Halteelements 1 wieder aneinander an. Die Oberseiten der Schenkel 13,14 definieren eine die Last aufnehmende Ebene E. Die Schenkel 13,14 sind in Querrichtung durch Verstrebungen 15 verbunden, die in der Frontansicht in Längsrichtung L annähernd U-förmig sind (siehe Fig. 3). In den dadurch gebildeten Vertiefungen ist ein Behälter 19 mit einem Deckel 24 angeordnet. Der Behälter 19 dient zur geschützten Aufnahme von Gütern sowie bei nasser Fahrbahn auch als Spritzschutz. Der Deckel 24 liegt in der Ebene E und stützt die Last zusätzlich, kann aber auch darunter liegen. Der Behälter 19 weist an seinem Boden Klemmelemente 21 auf, die die Verstrebungen 15 teilweise umschliessen und so den Behälter 19 im käfigartigen Trägerteil 2 ortsfest halten. Mit Hilfe der Klemmelemente 21 kann der Behälter 19 am Trägerteil eingeklipst werden und gegebenenfalls wieder ausgeklipst werden. Zudem weist der Behälter 19 in seinem Inneren ein Aufnahmeelement 25 für eine Pumpe 35 auf. Des weiteren weist der Trägerteil 2 an seiner dem Halteelement 1 abgewandten Seite eine Halterung 20 auf, in welche ein Rücklicht 26 gesteckt werden kann. Die auf den Trägerteil 2 aufzubringende Last kann beispielsweise mittels eines Spanngummis 27 befestigt werden.

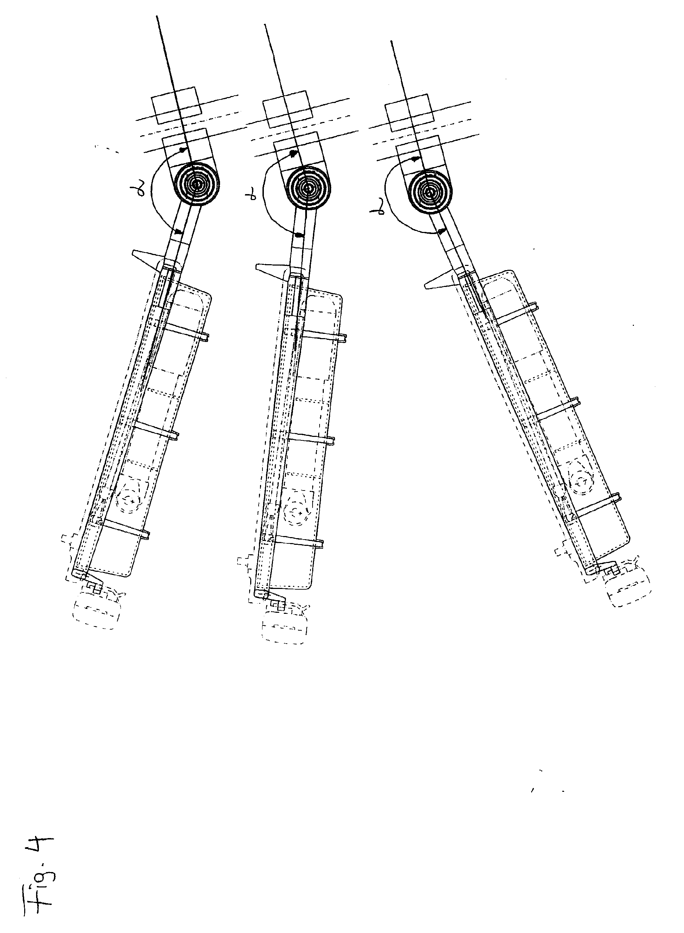

Fig. 4 zeigt den erfindungsgemässen Gepäckträger in drei verschiedenen Winkeleinstellungen zwischen dem Halteelement 1 und dem Trägerteil 2. Bevorzugterweise ist der Winkel α zwischen dem Halteelement 1 und dem Trägerteil 2 in Schritten von 3 bis 15, bevorzugterweise 6 Grad einstellbar.

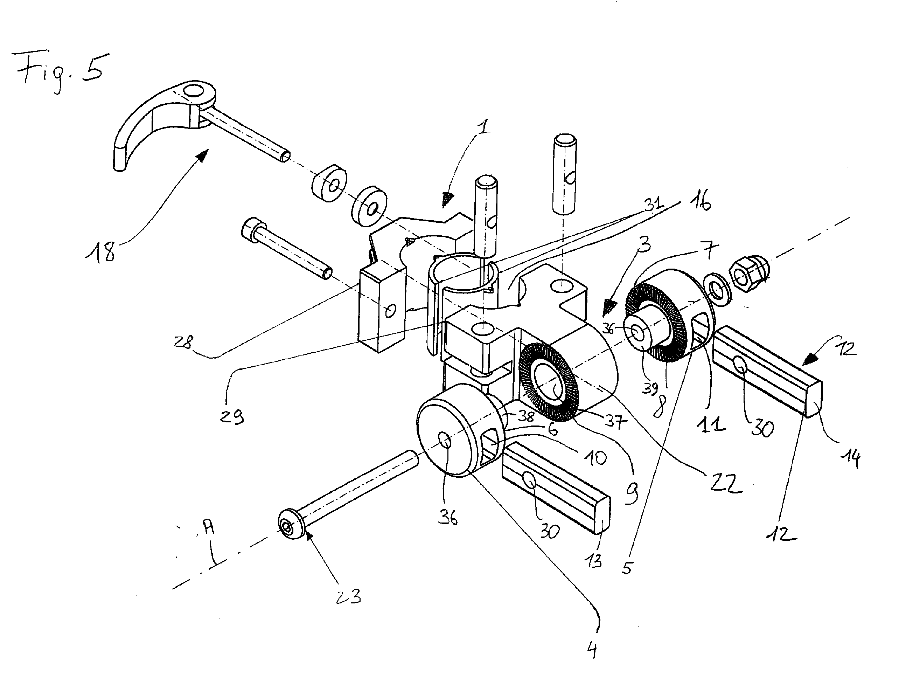

Fig. 5 zeigt eine Explosionszeichnung des Halteelements 1, des Gelenks 3 und eines Teils des Trägerteils 2. Das Halteelement 1 besteht aus einem ersten Halteteil 28 und einem zweiten Halteteil 29, die mittels eines Spannmechanismus 18 gegeneinander verspannbar sind und im zusammengefügten Zustand eine zylinderförmige Aufnahme 16 für das Sattelrohr 17 bilden. Die Aufnahme 16 kann zur Anpassung an verschiedene Sattelrohrdurchmesser nach Bedarf mittels Einlageschellen 31 verkleinert werden.

Das Gelenk 3 umfasst einen ersten Gelenkteil 4, einen zweiten Gelenkteil 5 und einen Gelenkskörper 22. Im Anwendungsfall ist der Trägerteil 2 fest mit den beiden Gelenkteilen 4, 5 verbunden. Diese weisen dazu Ausnehmungen 10,11 auf, die der Aufnahme der Enden des Rahmens 12 dienen, welcher an den Gelenkteilen 4,5 befestigbar ist. Der Gelenkskörper 22 ist durch eine halbzylinderförmigen Fortsatz am zweiten Halteteil 29 gebildet.

Die Gelenkteile 4,5 sind zu ihrer Längsachse A rotationssymmetrisch. Sie weisen entlang der Achse A eine durchgehende Bohrung 36 auf, die zum Durchführen einer Fixierschraube 23 dient. Die Gelenkteile 4, 5 sind im wesentlichen zylinderförmig gestaltet, wobei sie an ihrer dem Gelenkkörper 22 zugewandten Seite einen ebenfalls zylinderförmigen Fortsatz 38, 39 aufweisen. Dieser wird im Anwendungsfall in eine durchgehende weitere Bohrung 37 im Gelenkkörper eingesetzt, die etwa den gleichen Durchmesser wie die Fortsätze 38, 39 aufweist. und. Auf ihrer dem Gelenkskörper 22 jeweils zugewandten Stirnseite 6, 7 weisen die Gelenkteile 4,5 Zähne 8 auf. Diese sind kranzartig auf dem zwischen dem Fortsatz 38, 39 und dem Grundkörper des Gelenkteils 4, 5 gebildeten Absatz angeordnet. Im zusammengebauten Zustand greifen die Zähne 8 in Zähne 9 des Gelenkskörpers 22 ein. Diese sind ebenfalls kranzartig an den Stirnseiten des Gelenkskörpers 22 um die Bohrung 37 herum angeordnet.

Durch Auseinanderziehen in Richtung der Achse A und Drehen der Gelenkteile 4,5 relativ zum Gelenkskörper 22 um die Achse A ist der Winkel α zwischen dem Halteelement 1 und dem Trägerteil 2 fixierbar einstellbar. Zur Fixierung der gewünschten Winkelposition wird die Fixierschraube 23 angezogen. Die Fixierschraube 23 durchdringt im zusammengebauten Zustand die Bohrungen 36, 37 der Gelenkteile 4,5 und des Gelenkskörpers 22 sowie Löcher 30 in den Enden des Trägerteils 2. Auf diese Weise werden gleichzeitig die Winkelposition festgestellt und die Schenkel 13,14 des Trägerteils 2 am Gelenk 3 befestigt. Die Löcher 30 können auch eine andere Form haben oder es können an den Schenkeln 13,14 jeweils mehrere Löcher 30 angeordnet sein, um so den Trägerteil 2 in Längsrichtung L verstellen zu können.

Das Gelenk 3 ist vorzugsweise aus glasfaserverstärktem Kunststoff, z.B. PA 6.6. Besonders bevorzugt beträgt der Faseranteil 15 bis 40%, insbesondere 25%. Der Trägerteil besteht bevorzugt aus Aluminium. Dadurch ergibt sich eine hohe Stabilität und Festigkeit des Gelenks 3 bei geringem Gewicht. Der frei schwebende Trägerteil kann dadurch mit 8 bis 10 kg belastet werden.

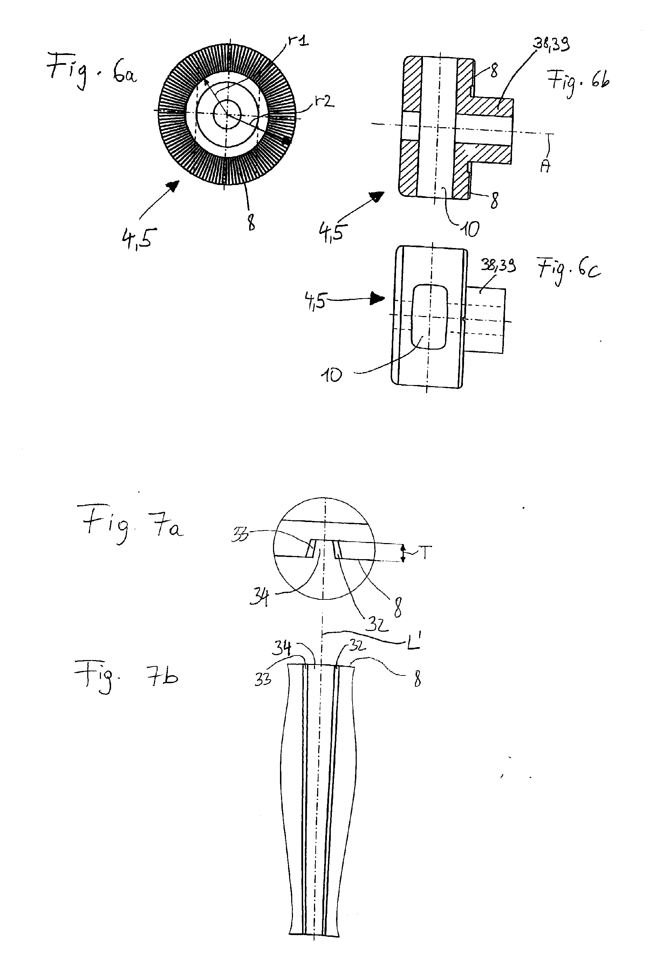

Die Fig. 6a-c zeigen den Gelenkteil 4, 5 in der Draufsicht auf seine Symmetrieachse A, sowie von vorne und von hinten. Die am Gelenkteil angeordneten Zähne 8 erstrecken sich in radialer Richtung von einem ersten Radius r1 ausgehend bis hin zu einem zweiten Radius r2. Die Zähne 8 sind in gleichen Winkelabständen von ca. 6° entlang des Umfangs angeordnet.

Fig. 7b zeigt einen Ausschnitt aus Fig. 6a zur Darstellung eines Zahns 8; Fig. 7a zeigt eine vergrösserte Seitenansicht in radialer Richtung des Gelenkteils 4 zur Darstellung des Zahnprofils. Der Zahn 8 wird dabei in radialer Richtung des Gelenkteils 4 nach aussen hin immer breiter. Die Zähne 8 weisen beidseitig schräg abfallende Flanken 32,33 auf, welche zwischen den Zähnen 8 keilförmige Vertiefungen 34 mit einer Tiefe T von vorzugsweise 0.2 bis 0.8mm, bevorzugt 0.5mm bilden. Die Zähne 9 des Gelenkskörpers 22 weisen eine zu den Zähnen 8 der Gelenkteile 4,5 komplementäre Form auf. Das Profil der Zähne 8,9 kann auch anders ausgestaltet sein, beispielsweise sägezahnartig oder rechteckförmig. Eine zur Längsachse L' des Zahns asymmetrische Flankenform, z.B. Sägezahnform, hat den Vorteil, dass das Gelenk in eine Drehrichtung relativ leicht verstellt werden kann, während es in die entgegengesetzte Richtung gut verrastet.

## Patentansprüche

1. Sattelstützengepäckträger mit einem Halteelement (1) zur Befestigung des Gepäckträgers an einem Fahrzeug und einem Trägerteil (2) zur Aufnahme einer Last, **dadurch gekennzeichnet, dass** der Trägerteil (2) mit dem Halteelement (1) über ein Gelenk (3) verbunden ist und mittels des Gelenks (3) verschiedene Winkel (α) zwischen dem Halteelement (1) und dem Trägerteil (2) einstellbar sind.

2. Gepäckträger nach Anspruch 1, **dadurch gekennzeichnet, dass** der Winkel (α) zwischen dem Halteelement (1) und dem Trägerteil (2) in Schritten von 3 bis 15 Grad, bevorzugt 6 Grad einstellbar ist.

3. Gepäckträger nach einem der obigen Ansprüche, **dadurch gekennzeichnet, dass** das Gelenk (3) einen mit dem Halteelement (1) verbundenen Gelenkkörper (22), ein erstes zylinderförmiges Gelenkteil (4) und ein zweites zylinderförmiges Gelenkteil (5) umfasst, wobei an den dem Gelenkkörper (22) zugewandten Stirnseiten (6,7) der Gelenkteile (4, 5) Zähne (8) angeordnet sind, die im Anwendungsfall zur Fixierung des Gelenks (3) in einer bestimmten Stellung mit Zähnen (9) des Gelenkskörpers (22) zusammenwirken.

4. Gepäckträger nach Anspruch 3, **dadurch gekennzeichnet, dass** der Gelenkkörper (22) und die Gelenkteile (4,5) gegeneinander verspannbar sind.

5. Gepäckträger nach einem der Ansprüche 3 oder 4, **dadurch gekennzeichnet, dass** die Gelenkteile (4, 5) jeweils eine Ausnehmung (10, 11) zum Einstecken des Trägerteils (2) aufweisen.

6. Gepäckträger nach Anspruch 5, **dadurch gekennzeichnet, dass** der Trägerteil (2) einen im wesentlichen U-förmigen Rahmen (12) umfasst, dessen beide Schenkel (13,14) in die Ausnehmungen (10,11) der Gelenkteile (4, 5) einsteckbar sind.

7. Gepäckträger nach einem der obigen Ansprüche, **dadurch gekennzeichnet, dass** das Halteelement (1) einen ersten Halteteil (28) und einen zweiten Halteteil (29) umfasst, die im zusammengebauten Zustand eine Aufnahme (16) für ein Sattelrohrs (17) bilden und die zur Befestigung am Sattelrohr (17) mittels eines Spannmechanismus (18) gegeneinander verspannbar sind.

8. Gepäckträger nach einem der obigen Ansprüche, **dadurch gekennzeichnet, dass** der Trägerteil (2) einen Behälter (19) aufweist, wobei ein Deckel (24) des Behälters (19) in der die Last aufnehmenden Ebene E oder darunter angeordnet ist.

9. Gepäckträger nach einem der obigen Ansprüche, **dadurch gekennzeichnet, dass** das Gelenk (3) aus glasfaserverstärktem Kunststoff besteht.
